# EUROPEAN PATENT SPECIFICATION

(11) **EP 1 778 737 B1**
(45) Date of publication and mention of the grant of the patent: **12.01.2011**
(21) Application number: 05779929.8
(22) Date of filing: 25.03.2005
(51) Int. Cl.: C08F 2/24, C08L 55/02, C08F 253/00, C08F 279/02, C08F 279/04, C08L 51/04

(54) **METHOD FOR PREPARING RUBBER-REINFORCED THERMOPLASTIC RESIN, AND RUBBER-REINFORCED THEMOPLASTIC RESIN COMPOSITION USING THE SAME**
VERFAHREN ZUR HERSTELLUNG VON KAUTSCHUKVERSTÄRKTEM THERMOPLASTISCHEM HARZ UND ZUSAMMENSETZUNG DAMIT
PROCEDE D'ELABORATION DE RESINE THERMOPLASTIQUE RENFORCEE CAOUTCHOUC ET COMPOSITION DE CETTE RESINE AINSI ELABOREE

(30) Priority: 19.08.2004 KR 2004065376
(43) Date of publication of application: 02.05.2007
(73) Proprietor: LG Chem Ltd., Seoul 150-721 (KR)
(72) Inventor: LEE, Jun-tae, Daegu 706-034 (KR); YOO, Keun-hoon, Gangmam-gu, Seoul 135-280 (KR); Lee, Chan-hong, Yuseong-gu, Daejeon 305-721 (KR); Kim, Hyun-do, Daejeon 305-738 (KR); KIM, Chnag-mook, Jeollabuk-do 565-802 (KR)
(74) Representative: HOFFMANN EITLE
(86) International application number: PCT/KR2005/000875
(87) International publication number: WO 2006/019215

(56) References cited:
- WO-A-00/26298
- WO-A-02/38641
- WO-A-98/20057
- WO-A1-89/05836
- KR-A- 2002 003 458
- KR-B- 441 799
- US-A- 5 674 940
- US-A- 5 883 189
- US-A1- 2002 103 295
- US-A1- 2003 036 586
- DATABASE WPI Derwent Publications Ltd., London, GB; AN 2004-019014 XP002444711 & KR 2003 0056031 A 4 July 2003 (2003-07-04)

## Description

### Technical Field

The present invention relates to a method for preparing a rubber-reinforced thermoplastic resin, a rubber-reinforced thermoplastic resin prepared by the same method, and a rubber-reinforced thermoplastic resin composition using the same, wherein the rubber-reinforced thermoplastic resin has excellent heat-sealability and thermal stability maintaining good mechanical properties.

### Background Art

The acrylonitrile-butadiene-styrene resin with rubber component added to improve the impact resistance of acrylonitrile-styrene copolymer, which has good dimensional stability, processability, and chemical resistance, is widely used as materials for monitor housings, game-machine housings, home appliances, office machines, and automobile-lamp housings.

In order to disperse the rubber component in acrylonitrile-styrene copolymer in the preparation of acrylonitrile-butadiene-styrene resin, either solution polymerization is done with a rubber component dissolved in acrylonitrile and styrene as monomers, and a solvent, or graft copolymerization is done with acrylonitrile and styrene on the rubber latex prepared by emulsion polymerization.

The impact resistance, chemical resistance, gloss, processability, heat-sealability, thermal stability, etc. of rubber-reinforced thermoplastic resins prepared by emulsion polymerization show big difference depending on rubber morphology, gel content, and molecular weight, graft ratio, and monomer composition of copolymer grafted on rubber latex.

The most of rubber-reinforced thermoplastic resins currently employed do not have good heat-sealability, while their impact resistance, chemical resistance, gloss, and processability have been improved.

The heat-sealability is the property required to make a final form of product by heating the sections of molded parts and joining them together. It requires clean surfaces of the joining sections.

In order to have good impact resistance, chemical resistance, gloss, mechanical properties such as processability, etc. of rubber-reinforced thermoplastic resins, technologies are disclosed with regard to various rubber morphology and gel content.

In general, the rubber-reinforced thermoplastic resins are prepared by blendng a graft copolymer prepared by copolymerization of one or more monomers on an emulsion-polymerized rubber latex, and a styrenic copolymer prepared by bulk polymerization or solution polymerization. Various kinds of the styrenic copolymer prepared by bulk polymerization or solution polymerization herein have been produced with diverse monomer compositions and molecular weights depending on the characteristics of the rubber-reinforced thermoplastic resin as a final product. Particularly their monomer composition has such a wide range of acrylonitrile content as from 22 to 34 weight %.

In Korea Laid-open Publication Patent Nos. 2002-7010992 and 2002-7010993, the monomer composition of the copolymer grafted to rubber latex has the acrylonitrile to styrene ratio of 27/73 by weight. This monomer composition ratio is the one to have effective blending of a graft copolymer prepared by emulsion polymerization and various styrenic copolymers prepared by bulk polymerization or solution polymerization.

The said Korea Laid-open Publication Patent No. 2002-7010992 (International Application No. PCT/EP2001/01494) discloses the use of a mixture comprising a rubber latex having average particle diameter of 0.15 to 0.22 µm and gel content of 50 to 85 weight % and a rubber latex having average particle diameter of 0.26 to 0.34 µm and gel content of 45 to 70 weight %.

Likewise, the said Korea Laid-open Publication Patent No. 20.02-7-710993 (International Application No. PCT/EP2001/01493) discloses the use of the mixture comprising a rubber latex having average particle diameter of 0. 25 to 0.31 µm and gel content of 45 to 70 weight % and a rubber latex having average particle diameter of 0.36 to 0.46 µm and gel content of 60 to 85 weight %.

However, the said disclosed inventions are related only to good impact resistance, processability and gloss, and they do not to neat-sealability.

US 2003/0036586 A1 discloses ABS moulding compositions, wherein the graft rubber polymers contain 3 butadiene polymer latices of defined particle size, particle size distribution and gel content, and wherein at least one polybutadiene latex has been produced by seed polymerization.

The present inventions studied assiduously to solve the said problems of prior arts and completed the present invention by discovering that heat-sealability and thermal stability can be improved without deteriorating the impact resistance, chemical resistance, gloss, mechanical properties such as processability, of rubber reinforced thermoplastic resin composition, on the basis of 100 weight parts of total monomer used to prepare graft copolymer, by using the mixture comprising 10 to 30 weight parts of a rubber latex having average particle diameter of 0.08 to 0.16 µm and gel content of 65 to 95 weight % and 15 to 45 weigh parts of a rubber latex having average particle diameter of 0.26 to 0.34 µm and gel content of 55 to 85 weight %, keeping the weight ratio of vinyl cyanide compound including acrylonitrile to aromatic vinyl compound including styrene from 16/84 to 24/76 as a monomer composition grafted on rubber latex, and adjusting the graft ratio of graft copolymer, i.e. rubber-reinforced thermoplastic resin, from 25 to 65.

### Disclosure of the Invention

The purpose of the present invention is to provide a method for preparing a rubber-reinforced thermoplastic resin, a rubber-reinforced thermoplastic resin thereby, and a rubber-reinforced thermoplastic resin composition using the same, wherein the rubber-reinforced thermoplastic resin has excellent heat-sealability and thermal stability maintaining good impact resistance, chemical resistance, gloss, and mechanical properties such as processability.

More specifically, a method for preparing the rubber-reinforced thermoplastic resin of the present invention is characterized in that it comprises,

on the basis of 100 weight parts of total monomer including rubber latexes used to prepare graft copolymer,
a) the stage of charging 45 to 65 weight parts of the mixture into a polymerization reactor, comprising 10 to 30 weight parts of a rubber latex having average particle diameter of 0.08 to 0.16 µm and gel content of 65 to 95 weight % and 15 to 45 weight parts of a rubber latex having average particle diameter of 0.26 to 0.34 µm and gel content of 55 to 85 weight %, 5 to 15 weight parts of aromatic vinyl compound, 1 to 6 weight parts of vinyl cyanide compound, 0.3 to 0.8 weight part of emulsifier, 100 to 150 weight parts of deionized water, and 0.1 to 1.0 weight part of molecular weight control agent, raising the temperature of the polymerization reactor up to 40 to 50°C, starting the polymerization reaction by charging peroxide initiator and activator, and slowly raising the temperature of the polymerization reactor up to 60 to 70°C;
b) the stage, after 30 to 60 minutes since the beginning of the polymerization and when the monomer conversion of the polymerization reaction at the stage a) reaches 70 to 90 %, of charging the monomer emulsion comprising 20 to 30 weight parts of aromatic vinyl compound, 5 to 10 weight parts of vinyl cyanide compound, 0.5 to 1.5 weight part of emulsifier, and 20 to 30 weight parts of deionized water, and peroxide initiator into the reactant from said stage a) for 1 to 3 hours continuously, and maintaining the temperature of the polymerization reactor at the range from 70 to 80°C; and
c) the stage, after completing the charging of the monomer emulsion and peroxide initiator at said stage b), of charging again peroxide initiator and activator at once and polymerizing it at 70 to 80°C for 1 to 2 hours, wherein the monomer conversion is 99 % or more,
and the weight ratio of vinyl cyanide compound to aromatic vinyl compound at said stages a) and b) is from 16/84 to 24/76, and the graft ratio of copolymer grafted on the rubber latex is from 25 to 65.

Hereinafter, the preparation method according to the present invention will be further described.

Though the preparation method of the present invention employs two kinds of rubber latex as Korea Laid-open Publication Patent Nos. 2002-7010992 and 2002-7010993, the present invention uses 45 to 65 weight parts of the mixture comprising 10 to 30 weight parts of a rubber latex having average particle diameter of 0.08 to 0.16 µm and gel content of 65 to 95 weight % and 15 to 45 weight parts of a rubber latex having average particle diameter of 0.26 to 0.34 µm and gel content of 55 to 85 weight %, to improve the heat-sealability without deteriorating the impact resistance, chemical resistance, gloss, mechanical properties such as processability.

If less than 10 weight parts of the rubber latex having average particle diameter of 0.08 to 0.16 µm and gel content of 65 to 95 weight % are used, the gloss and heat-sealability are getting worse. If greater than 30 weight parts are used, the impact resistance, processability and thermal stability are getting worse.

Unlike said disclosed inventions, the preparation method according to the present invention improved the heat-sealability of the final product, rubber-reinforced thermoplastic resin composition, by keeping the weight ratio of vinyl cyanide compound to aromatic vinyl compound as the monomer composition grafted on rubber latex to be from 16/84 to 24/76.

If the weight ratio of vinyl cyanide compound in the monomer composition of the copolymer grafted on rubber latex is lower than said range, the gloss and heat-sealability of the final product, rubber-reinforced thermoplastic resin composition, are drastically getting worse. If it is higher than said range, the heat-sealability is getting worse.

Furthermore, the heat-sealability and thermal stability are improved in this invention maintaining the good impact resistance, chemical resistance, gloss, and processability by adjusting the graft ratio of graft copolymer to be from 25 to 65. If the graft ratio is lower than 25, the gloss and thermal stability of the final product, rubber-reinforced thermoplastic resin composition, are getting worse. If the graft ratio is higher than 65, the heat-sealability is getting worse.

The aromatic vinyl compound that can be used at said stages a) and b) may be one or more compounds selected from the group consisting of styrene, alpha-methylstyrene, alpha-ethylstyrene, and para-methylstyrene, and particularly styrene is preferable.

The vinyl cyanide compound that can be used at said stages a) and b) may be one or more compounds selected from the group consisting of acrylonitrile, methacrylonitrile, and ethacrylonitrile, and particularly acrylonitrile is preferable.

A third monomer may be used in addition to the aromatic vinyl compound and vinyl cyanide compound at said stages a) and b). The third monomer may be vinyl monomer in small amount such as maleimide, N-methylmaleimide, N-ethylmaleimide, N-propylmaleimide, N-phenylmaleimide, methyl methacrylate, methyl acrylate, butyl acrylate, acrylic acid, maleic anhydride, and a mixture thereof.

The peroxide initiator that can be used at said stages a), b) and c) may be an organic peroxide such as tertiary-butylhydroperoxide, cumene hydroperoxide, diisopropylbenzene hydroperoxide, etc., or an inorganic peroxide such as potassium persulfate salt, or sodium persulfate salt. It can be used as a single compound or a mixture thereof.

The total usage of said peroxide initiator may be 0.05 to 0.5 weight part. In the total usage of said peroxide initiator, 30 to 50 weight % may be used at said stage a), 30 to 50 weight % at said stage b), and 10 to 20 weight % at said stage c).

The activator at said stages a) and c) may be one or more compounds selected from the group consisting of sodium formaldehydesulfoxylate, sodium ethylenediaminetetraacetate, ferrous sulfate, dextrose, sodium pyrophospate, and sodium sulfite.

The said activator may include 0.03 to 0.3 weight part of dextrose, 0.03 to 0.3 weight part of sodium pyrophospate, and 0.001 to 0.01 weight part of sodium sulfite. In the total usage of said activator, 60 to 80 weight % may be used at said stage a) and 20 to 40 weight % at said stage c).

The said emulsifier may be a single compound or a mixture of compounds selected from the group consisting of alkylaryl sulfonate, alkalimetal alkylsulfate, sulfonated alkylester, fatty acid soap, and alkali salt of rosin acid.

Mercaptans are frequently used as a molecular weight control agent and tertiary-dodecyl mercaptan is preferable. The usage of the molecular weight control agent may be 0.1 to 1.0 weight part.

The powder form of rubber-reinforced thermoplastic resin may be obtained by coagulating, washing, dehydrating and drying the latex polymerized by the method of the present invention with a widely-known coagulant such as sulfuric acid, MgSO₄, CaCl₂, or Al₂ (SO₄)₃.

The present invention also provides the rubber-reinforced thermoplastic resin composition, on the basis of 100 weight parts of rubber-reinforced thermoplastic resin composition, comprising a) 20 to 80 weight parts of the rubber-reinforced thermoplastic resin prepared by the method of the present invention, and b) 20 to 80 weight parts of the styrenic copolymer of weight-average molecular weight of 80,000 to 200,000.

The said styrenic copolymer may be prepared by bulk polymerization or solution polymerization, and the weight ratio of vinyl cyanide compound in the monomer composition is preferably from 20 to 35.

Specifically the styrenic copolymer in said stage b) may be acrylonitrile-styrene copolymer having acrylonitrile content of 20 to 35 weight %, acrylonitrile-styrene-alpha-methylstyrene terpolymer having acrylonitrile content of 20 to 35 weight %, alpha-methylstyrene content of 60 to 70 weight %, and styrene content of 1 to 10 weight %, or a mixture thereof.

The said rubber-reinforced thermoplastic resin composition may additionally include one or more as additives selected from the group consisting of light-stabilizer, lubricator, UV-absorber, plasticizer, colorant, flame retardant, reinforcing agent, compatibilizer, foaming agent, wood powder, filler, metal powder, bactericide, fungicide, silicone oil, and coupling agent.

### Modes for Carrying Out the Invention

Hereinafter, the present invention will be further described in the following examples, but the scope of the present invention is not limited to these examples.

### <Preparation of Rubber-Reinforced Thermoplastic Resin>

### Example 1

Into a polymerization reactor installed with a heating equipment were charged 20 weight parts of a rubber latex having average particle diameter of 0.095 µm and gel content of 83 weight %, 35 weight parts of a rubber latex having average particle diameter of 0.31 µm and gel content of 75 weight %, 120 weight parts of deionized water, 3.0 weight parts of acrylonitrile, 12 weight parts of styrene, 0.5 weight part of potassium rosinate, and 0.1 weight part of tertiary-dodecyl mercaptan. The temperature of the reactor was then raised.

When the internal temperature of the reactor reached at 45°C, the polymerization reaction was started by charging 0.1 weight part of tertiary-butyl hydroperoxide and 0.25 weight part of an activator comprising dextrose, sodium pyrophospate, and ferrous sulfate in the ratio of 50/40/1. The temperature of the reactor was then increased to 70°C in 60 minutes. The polymerization conversion herein was 73%. (Stage a)

In a separate mixing equipment, an emulsion was prepared by mixing 6 weight parts of acrylonitrile, 24 weight parts of styrene, 25 weight parts of deionized water, and 1.2 weight part of potassium rosinate. This monomer emulsion was continuously charged into the reactor for approximately 2 hours. Separately 0.15 weight part of tertiary-butyl hydroperoxide was continuously charged into the reactor for approximately 2 hours. The polymerization temperature herein was kept to 70°C. (Stage b)

After completing the monomer emulsion charging, 0.12 weight part of an activator comprising dextrose, sodium pyrophospate, and ferrous sulfate in the ratio of 50/40/1, and 0.05 weight part of tertiary-butyl hydroperoxide were charged into the reactor at once. The temperature of the reactor was then raised to 80°C in an hour and the reaction was terminated. The polymerization conversion herein was 99%. (Stage c)

To the completely reacted latex was charged 0.7 weight part of IR-1076 (a hindered phenol-type antioxidant manufactured by Ciba). The rubber-reinforced thermoplastic resin in powder form was obtained by coagulating with 10% sulfuric acid solution, washing and drying.

The graft ratio of the rubber-reinforced thermoplastic resin thus obtained was 48.

In order to measure the graft ratio, the styrenic copolymer not grafted to rubber component was dissolved by mixing 2 g of rubber-reinforced thermoplastic resin in powder form in 100 Mℓ of acetone for 24 hours with stirring. The sol and gel were then separated by ultracentrifuge. The graft ratio was calculated by the following equation:

Graft Ratio = [(Gel Weight - Rubber Weight)/(Rubber Weight)] × 100

### Example 2

Into a polymerization reactor installed with a heating equipment were charged 20 weight parts of a rubber latex having average particle diameter of 0.12 µm and gel content of 89 weight %, 40 weight parts of a rubber latex having average particle diameter of 0.30 µm and gel content of 74 weight %, 120 weight parts of deionized water, 3.5 weight parts of acrylonitrile, 11.5 weight parts of styrene, 0.5 weight part of potassium rosinate, and 0.1 weight part of tertiary-dodecyl mercaptan. The temperature of the reactor was then raised.

When the internal temperature of the reactor reached at 45°C, the polymerization reaction was started by charging 0.1 weight part of tertiary-butyl hydroperoxide and 0.25 weight part of an activator comprising dextrose, sodium pyrophospate, and ferrous sulfate in the ratio of 50/40/1. The temperature of the reactor was then raised to 70°C in 60 minutes. The polymerization conversion herein was 73%. (Stage a)

In a separate mixing equipment, an emulsion was prepared by mixing 7.2 weight parts of acrylonitrile, 22.8 weight parts of styrene, 25 weight parts of deionized water, and 1.2 weight part of potassium rosinate. This monomer emulsion was continuously charged into the reactor for approximately 2 hours. Separately 0.15 weight part of cumene hydroperoxide was continuously charged into the reactor for approximately 2 hours. The polymerization temperature herein was kept to 70°C. (Stage b)

Hereinafter, Stage c and the coagulation, washing and drying process was the same as in Example 1.

The graft ratio of the rubber-reinforced thermoplastic resin thus obtained was 46.

### Example 3

The rubber-reinforced thermoplastic resin was prepared in the same manner as in Example 1 except that cumene hydroperoxide was used as a peroxide initiator in Stage b).

The graft ratio of the rubber-reinforced thermoplastic resin thus obtained was 56.

### Example 4

The rubber-reinforced thermoplastic resin was prepared by the same manner as in Example 1 except that diisopropylbenzene hydroperoxide was used as a peroxide initiator in Stage b).

The graft ratio of the rubber-reinforced thermoplastic resin thus obtained was 63.

### Example 5

The rubber-reinforced thermoplastic resin was prepared in the same manner as in Example 1 except that an emulsion prepared separately was continuously charged into the reactor for 90 minutes, and, separately, cumene hydroperoxide instead of tertiary-butyl hydroperoxide was continuously charged for 90 minutes, and the polymerization temperature herein was slowly raised to 75°C in Stage b).

The graft ratio of the rubber-reinforced thermoplastic resin thus obtained was 51.

### Comparative Example 1

The rubber-reinforced thermoplastic resin was prepared in the same manner as in Example 1 except that 5 weight parts of a rubber latex having average particle diameter of 0.095 µm and gel content of 83 weight % and 50 weight parts of a rubber latex having average particle diameter of 0.31 µm and gel content of 75 weight % were employed in Stage a).

The graft ratio of the rubber-reinforced thermoplastic resin thus obtained was 32.

### Comparative Example 2

The rubber-reinforced thermoplastic resin was prepared in the same manner as in Example 1 except that 35 weight parts of a rubber latex having average particle diameter of 0.095 µm and gel content of 83 weight % and 20 weight parts of a rubber latex having average particle diameter of 0.31 µm and gel content of 75 weight % were employed in Stage a).

The graft ratio of the rubber-reinforced thermoplastic resin thus obtained was 67.

### Comparative Example 3

The rubber-reinforced thermoplastic resin was prepared in the same manner as in Example 1 except that 4.2 weight parts of acrylonitrile and 10.8 weight parts of styrene were used in Stage a) and 8.4 weight parts of acrylonitrile and 21.6 weight parts of styrene were used in Stage b).

The graft ratio of the rubber-reinforced thermoplastic resin thus obtained was 52.

### Comparative Example 4

The rubber-reinforced thermoplastic resin was prepared in the same manner as in Example 1 except that 2.1 weight parts of acrylonitrile and 12.9 weight parts of styrene were used in Stage a) and 4.2 weight parts of acrylonitrile and 25.8 weight parts of styrene were used in Stage b).

The graft ratio of the rubber-reinforced thermoplastic resin thus obtained was 52.

### Comparative Example 5

The rubber-reinforced thermoplastic resin was prepared in the same manner as in Example 1 except that potassium persulfate salt was used as a peroxide initiator in every stage.

The graft ratio of the rubber-reinforced thermoplastic resin thus obtained was 24.

### Comparative Example 6

The rubber-reinforced thermoplastic resin was prepared in the same manner as in Example 1 except that an emulsion prepared separately was continuously charged into the reactor for 3 hours in Stage b), and, separately, diisopropylbenzene hydroperoxide was continuously charged for 3 hours, and the polymerization temperature herein was slowly raised to 75°C.

The graft ratio of the rubber-reinforced thermoplastic resin thus obtained was 68.

### <Preparation of Styrenic Copolymer>

### Styrenic Copolymer Resin 1

A stryrene-acrylonitrile copolymer having a styrene to acrylonitrile weight ratio of 72/28 and a weight-average molecular weight of 110,000 was prepared by solution polymerization.

### Styrenic Copolymer Resin 2

A stryrene-alpha-methylstyrene-acrylonitrile terpolymer having a styrene to alpha-methylstyrene to acrylonitrile weight ratio of 5/67/28 and a weight-average molecular weight of 120,000 was prepared by solution polymerization.

### <Preparation of Rubber-Reinforced Thermoplastic Resin Composition>

The said polymer composition was blended and pelletized according to the ratio given in Table 1. Mechanical properties, thermal stability and heat-sealability were measured with test specimens prepared thereby. The test results are shown in Table 2.

### Test Methods

### (1) IZOD impact strength

IZOD impact strength was measured in accordance with ASTM D256. The thickness of test specimen was 1/4 inch.

### (2) Melt Flow Rate

Melt Flow Rate was measured in accordance with ASTM D1238 under the measuring condition of 220°C and 10 Kg load.

### (3) Surface Gloss

Surface Gloss was measured in accordance with ASTM D528 under 45 degree angle.

### (4) Heat-Sealability

Heat-sealability was expressed in mm unit by the length of resin remained at the contacting surface of specimen and glass plate when the surface gloss specimen was pressed to the glass plate at 350°C by 10 Kg load for 10 seconds, followed by separating them by the speed of 5 cm/minute.

### (5) Thermal Stability

The decrease ratio of surface gloss was measured when a resin was extruded after staying for 15 minutes in the screw of the extruder set at 270°C. The less the decrease ratio of surface gloss is, the better the thermal stability of the product is.

**Table 1**

| Composition | | E.6 | E.7 | E.8 | E.9 | E.10 | C.7 | C.8 | C.9 | C.10 | C.11 | C.12 | E.11 | E.12 |
|---|---|---|---|---|---|---|---|---|---|---|---|---|---|---|
| RR TR | E.1 | 30 | - | - | - | - | - | - | - | - | - | - | 25 | - |
| | E.2 | - | 30 | - | - | - | - | - | - | - | - | - | - | 25 |
| | E.3 | - | - | 30 | - | - | - | - | - | - | - | - | - | - |
| | E.4 | - | - | - | 30 | - | - | - | - | - | - | - | - | - |
| | E.5 | - | - | - | - | 30 | - | - | - | - | - | - | - | - |
| | C.1 | - | - | - | - | - | 30 | - | - | - | - | - | - | - |
| | C.2 | - | - | - | - | - | - | 30 | - | - | - | - | - | - |
| | C.3 | - | - | - | - | - | - | - | 30 | - | - | - | - | - |
| | C.4 | - | - | - | - | - | - | - | - | 30 | - | - | - | - |
| | C.5 | - | - | - | - | - | - | - | - | - | 30 | - | - | - |
| | C.6 | - | - | - | - | - | - | - | - | - | - | 30 | - | - |
| SR | 1 | 70 | 70 | 70 | 70 | 70 | 70 | 70 | 70 | 70 | 70 | 70 | - | - |
| | 2 | - | - | - | - | - | - | - | - | - | - | - | 75 | 75 |

| | | | | | | | | | | | | | | |
|---|---|---|---|---|---|---|---|---|---|---|---|---|---|---|
| E.: Example, C.: Comparative Example, RRTR: Rubber-Reinforced Thermoplstic Resin, SR: Styrenic Resin | | | | | | | | | | | | | | |

**Table 2**

| | Impact Strength | Melt Flow Rate | Surface Gloss | Heat-Sealability | Thermal Stability |
|---|---|---|---|---|---|
| E.6 | 22 | 15 | 95 | 0.0 | 10 |
| E.7 | 23 | 15 | 95 | 0.0 | 10 |
| E.8 | 24 | 16 | 96 | 0.2 | 8 |
| E.9 | 25 | 17 | 97 | 0.2 | 8 |
| E.10 | 22 | 15 | 95 | 0.0 | 10 |
| C.7 | 19 | 13 | 85 | 2.0 | 5 |
| C.8 | 14 | 18 | 98 | 0.0 | 50 |
| C.9 | 23 | 17 | 97 | 1.5 | 10 |
| C.10 | 19 | 13 | 82 | 0.0 | 30 |
| C.11 | 10 | 8 | 60 | 0.0 | 15 |
| C.12 | 24 | 18 | 98 | 1.5 | 8 |
| E.11 | 17 | 12 | 99 | 0.0 | 10 |
| E.12 | 18 | 13 | 99 | 0.0 | 10 |

| | | | | | |
|---|---|---|---|---|---|
| E.: Example, C.: Comparative Example | | | | | |

### Industrial Applicability

As apparent from the test data of rubber-reinforced thermoplastic resin composition given in the above Table 2, the heat-sealability and thermal stability of rubber-reinforced thermoplastic resin composition according to the present invention can be improved maintaining good impact resistance, processability and surface gloss.

While the present invention has been particularly shown and described with reference to the exemplary embodiments thereof, it is apparent to those of ordinary skill in the art that various modifications and revisions therein are possible without departing from the scope of the present invention. It is also apparent that these modifications and revisions are included within the boundary of the following claims.

## Claims

1. A method for preparing the rubber-reinforced thermoplastic resin **characterized in that** it comprises
on the basis of 100 weight parts of total monomers including rubber latexes used to prepare graft copolymer,
a) the stage of charging 45 to 65 weight parts of the mixture into a polymerization reactor, comprising 10 to 30 weight parts of a rubber latex having average particle diameter of 0.08 to 0.16µm and gel content of 65 to 95 weight % and 15 to 45 weight parts of a rubber latex having average particle diameter of 0.26 to 0.34µm and gel content of 55 to 85 weight %, 5 to 15 weight parts of aromatic vinyl compound, 1 to 6 weight parts of vinyl cyanide compound, 0.3 to 0.8 weight part of emulsifier, 100 to 150 weight parts of deionized water, and 0.1 to 1.0 weight part of molecular weight control agent, raising the temperature of the polymerization reactor up to 40 to 50°C, starting the polymerization reaction by charging peroxide initiator and activator, and slowly raising the temperature of the polymerization reactor up to 60 to 70°C;
b) the stage, after 30 to 60 minutes since the beginning of the polymerization and when the monomer conversion of the polymerization reaction at the stage a) reaches 70 to 90 %, of charging the monomer emulsion comprising 20 to 30 weight parts of aromatic vinyl compound, 5 to 10 weight parts of vinyl cyanide compound, 0.5 to 1.5 weight part of emulsifier, and 20 to 30 weight parts of deionized water, and peroxide initiator into the reactant from said stage a) for 1 to 3 hours continuously, and maintaining the temperature of the polymerization reactor at the range from 70 to 80°C; and
c) the stage, after completing the charging of the monomer emulsion and peroxide initiator at said stage b), of charging again peroxide initiator and activator at once and polymerizing it at 70 to 80°C for 1 to 2 hours, wherein the monomer conversion is 99 % or more,
and the weight ratio of vinyl cyanide compound to aromatic vinyl compound at said stages a) and b) is from 16/84 to 24/76, and the graft ratio of copolymer grafted on the rubber latex is from 25 to 65.

2. The method for preparing the rubber-reinforced thermoplastic resin according to claim 1, wherein the aromatic vinyl compound comprises one or more compounds selected from the group consisting of styrene, alpha-methylstyrene, alpha-ethylstyrene, and para-methylstyrene.

3. The method for preparing the rubber-reinforced thermoplastic resin according to claim 1, wherein the vinyl cyanide compound comprises one or more compounds selected from the group consisting of acrylonitrile, methacrylonitrile, and ethacrylonitrile.

4. The method for preparing the rubber-reinforced thermoplastic resin according to claim 1, wherein the peroxide initiator comprises one or more compounds selected from the group consisting of an organic peroxide including tertiary-butylhydroperoxide, cumene hydroperoxide, and diisopropylbenzene hydroperoxide, and an inorganic peroxide including potassium persulfate salt and sodium persulfate salt.

5. The method for preparing the rubber-reinforced thermoplastic resin according to claim 1, wherein the emulsifier comprises one or more compounds selected from the group consisting of alkylaryl sulfonate, alkalimetal alkylsulfate, sulfonated alkylester, fatty acid soap, and alkali salt of rosin acid.

6. A rubber-reinforced thermoplastic resin prepared by one of the methods according to claim 1 to claim 5, wherein the rubber-reinforced thermoplastic resin comprises 10 to 30 weight parts of a rubber latex having average particle diameter of 0.08 to 0.16 µm and gel content of 65 to 95 weight % and 15 to 45 weight parts of a rubber latex having average particle diameter of 0.26 to 0.34 µm and gel content of 55 to 85 weight %, and the weight ratio of a vinyl cyanide compound to an aromatic vinyl compound is from 16/84 to 24/76, on the basis of 100 weight parts of total monomers used to prepare graft copolymer and a rubber latex, and the graft ratio thereof is from 25 to 65.

7. A rubber-reinforced thermoplastic resin composition comprising
a) 20 to 80 weight parts of the rubber-reinforced thermoplastic resin of claim 6; and
b) 20 to 80 weight parts of the styrenic copolymer of weight-average molecular weight of 80,000 to 200,000.

8. The rubber-reinforced thermoplastic resin composition according to claim 7, wherein the styrenic copolymer is acrylonitrile-styrene copolymer having acrylonitrile content of 20 to 35 weight %, or acrylonitrile-styrene-alpha- methylstyrene terpolymer having acrylonitrile content of 20 to 35 weight %, alpha-methylstyrene content of 60 to 70 weight %, and styrene content of 1 to 10 weight %, or a mixture thereof.

## Patentansprüche

1. Verfahren zur Herstellung eines Kautschuk- bzw. Gummi-verstärkten thermoplastischen Harzes, **dadurch gekennzeichnet, dass** es umfasst,
auf der Basis von 100 Gew.-Teilen der Gesamtmonomere, einschliesslich Kautschuklatizes, die verwendet werden, um Pfropfcopolymer herzustellen:
(a) einen Schritt zum Einbringen von 45 bis 65 Gew.-Teilen einer Mischung, umfassend 10 bis 30 Gew.-Teile eines Kautschuklatex mit einem mittleren Partikeldurchmesser von 0,08 bis 0,16 µm und einem Gelgehalt von 65 bis 95 Gew.% und 15 bis 45 Gew.-Teile eines Kautschuklatex mit einem mittleren Partikeldurchmesser von 0,26 bis 0,34 µm und einem Gelgehalt von 55 bis 85 Gew.%, 5 bis 15 Gew.-Teile aromatische Vinylverbindung, 1 bis 6 Gew.-Teile Vinylcyanidverbindung, 0,3 bis 0,8 Gew.-Teile Emulgator, 100 bis 150 Gew.-Teile entionisiertes Wasser und 0,1 bis 1,0 Gew.-Teile eines Molekulargewicht-Kontrollmittels, in einen Polymerisationsreaktor, Erhöhen der Temperatur des Polymerisationsreaktors auf bis zu 40 bis 50°C, Beginnen der Polymerisationsreaktion durch Einbringen von Peroxidinitiator und Aktivator und langsames Erhöhen der Temperatur des Polymerisationsreaktors auf 60 bis 70°C;
(b) einen Schritt, 30 bis 60 Minuten nach dem Beginn der Polymerisation und wenn der Monomerumsatz der Polymerisationsreaktion in Schritt (a) 70 bis 90 % erreicht, zum Einbringen einer Monomeremulsion, umfassend 20 bis 30 Gew.-Teile aromatische Vinylverbindung, 5 bis 10 Gew.-Teile Vinylcyanidverbindung, 0,5 bis 1,5 Gew.-Teile Emulgator und 20 bis 30 Gew.-Teile entionisiertes Wasser und Peroxidinitiator, in den Reaktionspartner aus Schritt (a) auf kontinuierliche Weise für 1 bis 3 Stunden und Aufrechterhalten der Temperatur des Polymerisationsreaktors im Bereich von 70 bis 80°C; und
(c) einen Schritt, nach Vollendung des Einbringens der Monomeremulsion und des Peroxidinitiators in Schritt (b), zum nochmaligen Einbringen von Peroxidinitiator und Aktivator auf einmal und Polymerisieren hiervon bei 70 bis 80°C für 1 bis 2 Stunden, worin der Monomerumsatz 99 % oder mehr beträgt,
und worin das Gewichtsverhältnis von Vinylcyanidverbindung zu aromatischer Vinylverbindung in den Schritten (a) und (b) 16:84 bis 24:76 beträgt und das Pfropfverhältnis des auf den Kautschuklatex gepfropften Copolymers 25 bis 65 beträgt.

2. Verfahren zur Herstellung des Kautschuk- bzw. Gummi-verstärkten thermoplastischen Harzes gemäss Anspruch 1, worin die aromatische Vinylverbindung eine oder mehrere Verbindungen, ausgewählt aus der Gruppe bestehend aus Styrol, α-Methylstyrol, α-Ethylstyrol und para-Methylstyrol, umfasst.

3. Verfahren zur Herstellung des Kautschuk- bzw. Gummi-verstärkten thermoplastischen Harzes gemäss Anspruch 1, worin die Vinylcyanidverbindung eine oder mehrere Verbindungen, ausgewählt aus der Gruppe bestehend aus Acrylnitril, Methacrylnitril und Ethacrylnitril, umfasst.

4. Verfahren zur Herstellung des Kautschuk- bzw. Gummi-verstärkten thermoplastischen Harzes gemäss Anspruch 1, worin der Peroxidinitiator eine oder mehrere Verbindungen, ausgewählt aus der Gruppe bestehend aus organischen Peroxiden, einschliesslich tert-Butylhydroperoxid, Cumolhydroperoxid und Diisopropylbenzolhydroperoxid, und anorganischen Peroxiden, einschliesslich Kaliumpersulfatsalz und Natriumpersulfatsalz, umfasst.

5. Verfahren zur Herstellung des Kautschuk- bzw. Gummi-verstärkten thermoplastischen Harzes gemäss Anspruch 1, worin der Emulgator eine oder mehrere Verbindungen, ausgewählt aus der Gruppe bestehend aus Alkylarylsulfonat, Alkalimetallalkylsulfat, sulfoniertem Alkylester, Fettsäureseife und Alkalisalzen von Harzsäure, umfasst.

6. Kautschuk- bzw. Gummi-verstärktes thermoplastisches Harz, hergestellt durch eines der Verfahren gemäss Anspruch 1 bis Anspruch 5, worin das Kautschuk- bzw. Gummi-verstärkte thermoplastische Harz 10 bis 30 Gew.-Teile eines Kautschuklatex mit einem mittleren Partikeldurchmesser von 0,08 bis 0,16 µm und einem Gelgehalt von 65 bis 95 Gew.% und 15 bis 45 Gew.-Teile eines Kautschuklatex mit einem mittleren Partikeldurchmesser von 0,26 bis 0,34 µm und einem Gelgehalt von 55 bis 85 Gew.% umfasst und das Gewichtsverhältnis von Vinylcyanidverbindung zu aromatischer Vinylverbindung 16:84 bis 24:76 beträgt, bezogen auf 100 Gew.-Teile der gesamten Monomere, die zur Verwendung von Pfropfcopolymer verwendet werden, und einem Kautschuklatex und das Pfropfverhältnis hiervon 25 bis 65 beträgt.

7. Kautschuk- bzw. Gummi-verstärkte thermoplastische Harzzusammensetzung, umfassend:
(a) 20 bis 80 Gew.-Teile des Kautschuk- bzw. Gummi-verstärkten thermoplastischen Harzes von Anspruch 6; und
(b) 20 bis 80 Gew.-Teile eines styrolischen Copolymers mit einem gewichtsgemittelten Molekulargewicht von 80.000 bis 200.000.

8. Kautschuk- bzw. Gummi-verstärkte thermoplastische Harzzusammensetzung gemäss Anspruch 7, worin das styrolische Copolymer ein Acrylnitril-StyrolCopolymer mit einem Acrylnitrilgehalt von 20 bis 35 Gew.% oder ein Acrylnitril-Styrol-α-Methylstyrol-Terpolymer mit einem Acrylnitrilgehalt von 20 bis 35 Gew.%, einem α-Methylstyrolgehalt von 60 bis 70 Gew.% und einem Styrolgehalt von 1 bis 10 Gew.% oder eine Mischung hiervon ist.

## Revendications

1. Procédé de préparation d'une résine thermoplastique renforcée de caoutchouc, **caractérisée en ce qu'**elle comprend:
sur la base de 100 parties en masse de monomères totaux, y compris les latex de caoutchouc utilisés pour préparer le copolymère greffé,
a) l'étape selon laquelle on introduit dans un réacteur de polymérisation 45 à 65 parties en masse d'un mélange comprenant 10 à 30 parties en masse d'un latex de caoutchouc ayant un diamètre moyen de particules de 0,08 à 0,16 µm et une teneur en gel de 65 à 95 % en masse, et 15 à 45 parties en masse d'un latex de caoutchouc ayant un diamètre moyen de particules de 0,26 à 0,34 µm et une teneur en gel de 55 à 85 % en masse, 5 à 15 parties en masse d'un composé vinylique aromatique, 1 à 6 parties en masse d'un composé de cyanure vinylique, 0,3 à 0,8 parties en masse d'un émulsionnant, 100 à 150 parties en masse d'eau désionisée, et 0,1 à 1,0 partie en masse d'un agent de régulation de la masse molaire, on fait monter la température du réacteur de polymérisation jusqu'à 40 à 50°C, on démarre la réaction de polymérisation en introduisant un amorceur de type peroxyde et un activateur, et on fait lentement monter la température du réacteur de polymérisation jusqu'à 60 à 70°C;
b) l'étape selon laquelle, au bout de 30 à 60 minutes après le début de la polymérisation et lorsque la conversion des monomères de la réaction de polymérisation de l'étape a) atteint 70 à 90 %, on introduit en continu, en 1 à 3 heures, une émulsion de monomères comprenant 20 à 30 parties en masse de composé vinylique aromatique, 5 à 10 parties en masse de cyanure vinylique, 0,5 à 1,5 partie en masse d'un émulsionnant, et 20 à 30 parties en masse d'eau désionisée, et un amorceur de type peroxyde dans le milieu réactionnel de ladite étape a), et on maintient la température du réacteur de polymérisation dans le domaine de 70 à 80°C; et
c) l'étape selon laquelle, après avoir terminé l'introduction de l'émulsion de monomères et de l'amorceur de type peroxyde de ladite étape b), on introduit de nouveau de l'amorceur de type peroxyde et de l'activateur en une fois et on polymérise à 70 à 80°C pendant 1 à 2 heures, la conversion des monomères étant d'au moins 99 %,
et le rapport en masse du cyanure vinylique au composé vinylique aromatique auxdites étapes a) et b) est de 16/84 à 24/76, et le rapport de greffage de copolymère greffé sur le latex de caoutchouc est de 25 à 65.

2. Procédé de préparation d'une résine thermoplastique renforcée de caoutchouc selon la revendication 1, dans lequel le composé vinylique aromatique comprend un ou plusieurs composés choisis dans le groupe constitué par le styrène, l'alpha-méthylstyrène, l'alpha-éthylstyrène et le para-méthylstyrène.

3. Procédé de préparation d'une résine thermoplastique renforcée de caoutchouc selon la revendication 1, dans lequel le composé de cyanure vinylique comprend un ou plusieurs composés choisis dans le groupe constitué par l'acrylonitrile, le méthacrylonitrile et l'éthacrylonitrile.

4. Procédé de préparation d'une résine thermoplastique renforcée de caoutchouc selon la revendication 1, dans lequel l'amorceur de type peroxyde comprend un ou plusieurs composés choisis dans le groupe constitué par un peroxyde organique comprenant l'hydroperoxyde de tert-butyle, l'hydroperoxyde de cumène et l'hydroperoxyde de diisopropylbenzène, et un peroxyde inorganique comprenant le persulfate de potassium et le persulfate de sodium.

5. Procédé de préparation d'une résine thermoplastique renforcée de caoutchouc selon la revendication 1, dans lequel l'émulsionnant comprend un ou plusieurs composés choisis dans le groupe constitué par un arylalkylsulfonate, un alkylsulfate de métal alcalin, un ester d'alkyle sulfonaté, un savon d'acide gras, et un sel de métal alcalin d'acide résinique.

6. Résine thermoplastique renforcée de caoutchouc préparée par l'un des procédés selon l'une des revendications 1 à 5, où la résine thermoplastique renforcée de caoutchouc comprend 10 à 30 parties en masse d'un latex de caoutchouc ayant un diamètre moyen de particules de 0,08 à 0,16 µm et une teneur en gel de 65 à 95 % en masse, et 15 à 45 parties en masse d'un latex de caoutchouc ayant un diamètre moyen de particules de 0,26 à 0,34 µm et une teneur en gel de 55 à 85 % en masse, et le rapport en masse du cyanure vinylique au composé vinylique aromatique est de 16/84 à 24/76, sur la base de 100 parties en masse de monomères totaux utilisés pour la préparation du copolymère greffé et de latex de caoutchouc, et leur rapport de greffage est de 25 à 65.

7. Composition de résine thermoplastique renforcée de caoutchouc, comprenant:
a) 20 à 80 parties en masse de la résine thermoplastique renforcée de caoutchouc de la revendication 6; et
b) 20 à 80 parties en masse d'un copolymère styrénique ayant une masse molaire moyenne en poids de 80 000 à 200 000.

8. Composition de résine thermoplastique renforcée de caoutchouc selon la revendication 7, dans laquelle le copolymère styrénique est un copolymère d'acrylonitrile-styrène ayant une teneur en acrylonitrile de 20 à 35 % en masse, ou un terpolymère d'acrylonitrile-styrène-alpha-méthylstyrène ayant une teneur en acrylonitrile de 20 à 35 % en masse, une teneur en alpha-méthylstyrène de 60 à 70 % en masse et une teneur en styrène de 1 à 10 % en masse, ou un de leurs mélanges.
